Europäisches Patentamt

European Patent Office

Office européen des brevets

(19)

(11) Publication number: **0 348 369**
**A2**

(12) **EUROPEAN PATENT APPLICATION**

(21) Application number: **89850182.0**

(22) Date of filing: **02.06.89**

(51) Int. Cl.⁴: **G 09 B 29/10**

(30) Priority: **22.06.88 FI 882990**

(43) Date of publication of application:
**27.12.89 Bulletin 89/52**

(84) Designated Contracting States:
**AT BE CH DE ES FR GB IT LI NL SE**

(71) Applicant: **RENCOTUOTE OY**
**Mestarintie 20-22**
**SF-06100 Porvoo (FI)**

(72) Inventor: **Niittynen, Raimo**
**Tammitie 11**
**SF-00330 Helsinki (FI)**

(74) Representative: **Roth, Ernst Adolf Michael et al**
**GÖTEBORGS PATENTBYRA AB Box 5005**
**S-402 21 Göteborg (SE)**

(54) **Information indicator board.**

(57) An information indicator board, comprising a board (1), which is provided with, e.g., a local map (2) and a pushbutton system (3), complemented with names and/or other information (4) of places on the map; and the information board has a light (5) turning on at a desired point when a selected pushbutton (6) is depressed. The pushbutton system (3) is connected to a control unit (7), which further can issue a control signal to a stepper motor unit (8) containing, e.g., a halogen lamp, from which light can be guided via an optical fiber calbe (9) to the desired point (5) on the board map (2).

Fig. 2

**Description**

## INFORMATION INDICATOR BOARD

The present invention concerns an information indicator board comprising a board, which is provided with, e.g., a local map, and a pushbutton system provided with the names of places and other information so that an illuminated indicator light can be lit on the board at a desired point when a selected pushbutton is depressed.

In all conventional designs of information indicator boards, each desired point to be illuminated at the depression of a pushbutton is provided with a dedicated indicator lamp. Large-size indicator boards can have a hundred lamps or more. Being an expendable component, the lamps will easily and quickly burn out, thus counteracting the desired function of the board that assumes all lamps being functional in all circumstances.

The present invention aims to overcome the abovementioned disadvantage. The information indicator board in accordance with the invention is characterized in that the pushbutton system is connected to a control unit, which further can issue a control signal to a stepper motor unit containing a light source, such as a lamp, from which light is guided via an optical fiber cable to a desired point on the information board. By virtue of the invention, the information board manages with only a single lamp, while the stepper motor serves for aiming the light beam toward a desired direction. This approach allows all points to be illuminated in a desired manner.

Another embodiment of the invention is characterized by having the light source formed of two lamps so that the second lamp is a spare lamp, and the information indicator board incorporates a warning lamp, e.g., a light-emitting diode, which will indicate a defect of the main lamp in the information board system. Consequently, in this design of the information indicator board, the system will not be out of function even though the main lamp would be broken. The LED lamp, which will indicate the defect of the main lamp, is placed to an easily visible location. This provides for an extremely high reliability and availability of the information board. The components of electrical and mechanical functions related to the information board can be altogether placed behind the board and protected in an enclosure, thus eliminating the possibility of damage to the information indicator board.

In the following, the invention will be examined in more detail by means of an exemplifying embodiment with reference to the attached drawings, in which

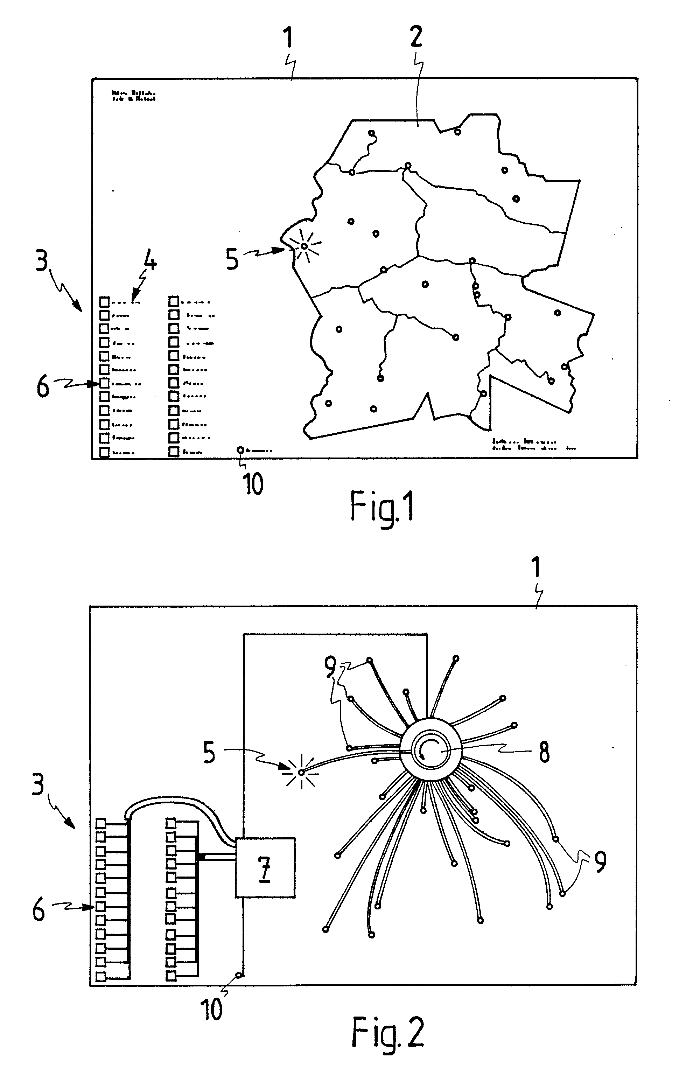

Fig. 1 shows the front side of an information board, on which a pushbutton system and a map is placed.

Fig. 2 shows the technical arrangement of a system placed behind the board.

The information indicator board comprises a board 1, which is provided with a local map 2 and a pushbutton system 3, complemented with names and/or other information 4 of places on the map. The information board is capable of turning on a light 5 at a desired point when a selected pushbutton 6 is depressed. The pushbutton system 3 is connected to a control unit 7, which further can issue a control signal to a stepper motor unit 8 containing, e.g., a halogen lamp, from which light can be guided via an optical fiber cable 9 to the desired point 5 on the board map 2. The light source comprises of two lamps so that the second lamp functions as a spare lamp, and additionally, the information board has an indicator light 10, which will indicate a defect of the main lamp in the information board system. When a desired pushbutton 6 is depressed in the pushbutton system 3, the control unit issues a control signal to the stepper motor unit 8, which then can pivotally rotate about its axis to an angle at which light from the lamp will be guided via the optical fiber cable 9 to the point 5, which will then illuminate the selected point 2 on the map in the desired manner.

## Claims

1. An information indicator board, comprising a board (1), which is provided with, e.g., a local map (2) and a pushbutton system (3), complemented with names and/or other information (4) of places on the map; and the information board has a light (5) turning on at a desired point when a selected pushbutton (6) is depressed; **characterized** in that the pushbutton system (3) is connected to a control unit (7), which further can issue a control signal to a stepper motor unit (8) containing, e.g., a halogen lamp, from which light can be guided via an optical fiber cable (9) to the desired point (5) on the board map (2).

2. An information indicator board as claimed in claim 1, **characterized** in that the light source is comprised of two lamps so that the second lamp functions as the spare lamp and that the indicator board is provided with an warning lamp (10) such as, e.g., an LED lamp, which will indicate a defect of the main lamp in the indicator board system.

Fig.1

Fig.2